# FASCICULE DE BREVET EUROPEEN

(11) **EP 2 920 109 B1**
(45) Date de publication et mention de la délivrance du brevet: **29.07.2020**
(21) Numéro de dépôt: 13803138.0
(22) Date de dépôt: 13.11.2013
(51) Int. Cl.: C01B 17/22

(54) **PROCÉDÉ DE PRÉPARATION DE SULFURE DE MÉTAL ALCALIN**
VERFAHREN ZUR HERSTELLUNG VON ALKALIMETALLSULFID
METHOD FOR PREPARING ALKALI METAL SULPHIDE

(30) Priorité: 15.11.2012 FR 1260885
(43) Date de publication de la demande: 23.09.2015
(73) Titulaire: Arkema France, 92700 Colombes (FR)
(72) Inventeur: SCHMITT, Paul Guillaume, 64230 Lescar (FR); FREMY, Georges, 64390 Sauveterre De Bearn (FR)
(86) Numéro de dépôt international: PCT/FR2013/052725
(87) Numéro de publication internationale: WO 2014/076416

(56) Documents cités:
- DE-A1- 10 008 161
- FR-A1- 2 681 883
- US-A- 2 106 952

## Description

L'invention a pour objet un procédé de préparation de sulfures de métaux alcalins, à partir de composés oxygénés de métaux alcalins et de composés organiques soufrés.

Les sulfures de métaux alcalins sont présents dans de nombreux et différents domaines d'applications. Par exemple, le sulfure de lithium peut être utilisé dans des formulations de lubrifiants, et également en tant que composant d'électrolytes dans les systèmes de stockage d'énergie, tels les piles et batteries lithium-soufre. En particulier, les batteries lithium-soufre ont une autonomie améliorée et une densité d'énergie plus importante que celles des batteries lithium-ions et sont ainsi des candidats prometteurs pour les nouvelles générations de systèmes de stockage d'énergie, par exemple les batteries.

Par ailleurs, le sulfure de rubidium est par exemple utilisé dans des applications de films semi-conducteurs pour les cellules photovoltaïques. Le sulfure de sodium est également utilisé dans de multiples applications, telles que, de manière non limitative, dans les industries textiles, du cuir et du papier.

De manière générale, les sulfures de métaux alcalins sont produits par réaction entre un composé alcalin et du sulfure d'hydrogène. Ainsi, le document JP 2010/163356 divulgue un procédé de production de sulfure de lithium à partir d'hydroxyde de lithium en milieu organique, en présence de sulfure d'hydrogène. De manière similaire, le document DE 10008161 divulgue la préparation de sulfures de métaux alcalins à partir du sulfure d'hydrogène et d'hydroxydes de métaux alcalins dans un solvant organique.

Le document WO 2010/043885 divulgue un procédé d'obtention d'alliage de lithium contenant des sulfures de métaux de transition, par un traitement thermique en phase solide de sulfure de métaux de transition et de composé lithié en présence d'agent réducteur tel que du sulfure d'hydrogène.

Les documents EP 0802159 et US 4126666 divulguent la production de sulfure de lithium par un traitement thermique d'hydroxyde de lithium et de carbonate de lithium respectivement en présence de sulfure d'hydrogène ou d'un mélange d'hydrogène et de soufre gazeux. Le document FR 2681883 divulgue la production de sulfure de sodium par traitement thermique du sulfate ou du carbonate de sodium en présence d'éthène et du sulfure d'hydrogène. On obtient ces gaz à partir d'un gaz contenant du méthyl-mercaptan ou du sulfure de diméthyle. Dans le procédé décrit dans le document US 2106952, on fait réagir de la soude ou du carbonate de sodium avec des gaz de distillation comprenant des composés capables de former du sulfure d'hydrogène.

Tous les documents de l'art antérieur utilisent du sulfure d'hydrogène comme agent de sulfuration. Cependant, le sulfure d'hydrogène est un gaz, dont en particulier le stockage, la manipulation et le post-traitement nécessitent des mesures drastiques en termes de sécurité. En effet le sulfure d'hydrogène est un gaz très toxique, son utilisation à l'échelle industrielle représente un risque sérieux, et il serait préférable de limiter son utilisation.

Il existe donc un besoin important de pouvoir disposer d'un procédé de production industriel de sulfures de métaux alcalins ne présentant pas les inconvénients de l'art antérieur.

De façon surprenante, la demanderesse a découvert, après diverses expériences et manipulations, que l'utilisation de certains composés organiques soufrés, permet de mener la réaction de production de sulfures de métaux alcalins, en présence ou non de catalyseur, dans des conditions facilement réalisables industriellement, tout en ne faisant pas appel à des réactifs gazeux, toxiques, voire très toxiques, tel que le sulfure d'hydrogène.

Selon un premier aspect, la présente invention concerne ainsi un procédé de préparation d'un sulfure de métal alcalin comprenant au moins une étape a) de réaction d'au moins un composé oxygéné dudit métal alcalin avec au moins un composé soufré de formule (I) : 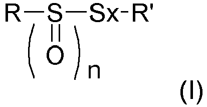 dans laquelle :
- R représente un radical alkyle, linéaire ou ramifié, ou alcényle, linéaire ou ramifié, contenant de 1 à 6 atomes de carbone, de préférence de 1 à 4 atomes de carbone, bornes incluses ;
- n est égal à 0, 1 ou 2 ;
- x est égal à 0 ou à un nombre entier prenant les valeurs 1 à 10, bornes incluses, de préférence x est un nombre entier égal à 1, 2, 3 ou 4 ;
- R' représente un radical alkyle, linéaire ou ramifié, ou alcényle, linéaire ou ramifié, contenant de 1 à 6 atomes de carbone, bornes incluses, de préférence de 1 à 4 atomes de carbone ou, seulement si n = x = 0, un atome d'hydrogène ;
   - ou bien R et R' peuvent former ensemble, et avec le ou les atome(s) de soufre qui les porte(nt) un hétérocycle soufré contenant de 2 à 12 atomes de carbone, de préférence de 2 à 8 atomes de carbone, bornes incluses, et éventuellement, outre le ou les atome(s) de soufre indiqués dans la formule (I), un ou plusieurs hétéroatomes choisis parmi oxygène, azote et soufre,
- dans lequel ledit composé soufré de formule (I) est tel que n = 0 et,
- dans lequel ledit composé soufré de formule (I) est tel que x = 1, 2 ou 3, ou est un mélange de composés soufrés avec, en moyenne, x compris entre 2 et 10 (bornes incluses) de préférence avec une valeur moyenne de x comprise entre 3 et 5 (bornes incluses).

Parmi les hétérocycles soufrés cités ci-dessus, on peut citer, à titre d'exemples non limitatifs le thiophène, le thiolane, le dithiolane, le thiazole, le thiazine, le thiépane, le dithiépane, l'oxathiane, et autres pour ne citer que les plus courants d'entre eux, mais aussi les dérivés cycliques soufrés des terpènes, tels que par exemple les produits d'addition du soufre sur les terpènes, notamment sur le myrcène qui sont les mono-, di-, tri- ou tétra-thiopérillènes.

Les composés de formule (I), utilisables dans le cadre du procédé de la présente invention, présentent de nombreux avantages, parmi lesquels on peut citer à titre non limitatif, de ne pas être gazeux à température ambiante, et le plus souvent d'être liquides à température ambiante, ainsi que d'être beaucoup moins toxiques que le sulfure d'hydrogène, voire de n'être que peu ou pas toxiques. Contrairement à la manipulation de sulfure d'hydrogène toxique et gazeux, l'utilisation des composés de formule (I) sous forme liquide ou solide, permet ainsi de faciliter notamment les procédures de manutention, ainsi que la conduite générale du procédé de synthèse des sulfures de métaux alcalins.

Le composé soufré de formule (I) est tel que n est égal à 0, et x = 1, 2 ou 3, de préférence x = 1 ou 2, de manière tout à fait préférée, x = 1. Selon encore un autre mode de réalisation, le composé de formule (I) peut être un mélange de composés de formule (I) pour lequel, en moyenne, x est compris entre 2 et 10 (bornes incluses) de préférence avec une valeur moyenne de x comprise entre 3 et 5 (bornes incluses).

Dans un mode de mise en œuvre, le composé soufré de formule (I) est tel que R et R' représentent chacun un radical alkyle linéaire ou ramifié comprenant de 1 à 6 atomes de carbone, de préférence de 1 à 4 atomes de carbone, par exemple méthyle, éthyle, propyle (n-propyle ou *iso*-propyle), butyle (n-butyle, *iso*-butyle ou *tert*-butyle), pentyles, et hexyles. On préfère en outre les composés de formule (I) dans lesquels les radicaux R et R' sont identiques.

De préférence, le composé soufré est choisi parmi le disulfure de diméthyle, le disulfure de diéthyle, le disulfure de di-n-propyle, le disulfure de di-iso-propyle, le disulfure de di-n-butyle, le disulfure de di-iso-butyle, le disulfure de di-tert-butyle, le trisulfure de diméthyle, le trisulfure de diéthyle, le trisulfure de di-n-propyle, le trisulfure de di-iso-propyle, le trisulfure de di-n-butyle, le trisulfure de di-iso-butyle, le trisulfure de di-tert-butyle, le tétrasulfure de diméthyle, le tétrasulfure de diéthyle, le tétrasulfure de di-n-propyle, le tétrasulfure de di-iso-propyle, le tétrasulfure de di-n-butyle, le tétrasulfure de di-iso-butyle, le tétrasulfure de di-tert-butyle et leurs mélanges, de préférence le disulfure de diméthyle, le trisulfure de diéthyle et le tétrasulfure de diméthyle, ainsi que les mélanges de polysulfures (n = 0 et 1 ≤ x ≤ 10) de dialkyle symétriques ou dissymétriques (R et R' identiques ou différents respectivement), tels que par exemples les mélanges connus sous l'acronyme DSO (« DiSulfide Oils » en langue anglaise).

Les composés indiqués ci-dessus peuvent bien entendu être utilisés seuls ou en mélanges, par exemple en mélanges de deux ou plusieurs des composés soufrés listés ci-dessus en toutes proportions.

Dans un mode préféré de mise en œuvre de l'invention, le composé soufré est choisi parmi le disulfure de diméthyle (DMDS), le disulfure de di-éthyle (DEDS), et leurs mélanges.

Les composés soufrés de formule (I) sont connus et disponibles dans le commerce ou sont aisément préparés à partir de modes opératoires connus de la littérature brevets, de la littérature scientifique, des Chemical Abstracts, ou de l'Internet.

Dans le procédé selon la présente invention, le ou les composé(s) soufré(s) tel(s) qu'il(s) vien(nen)t d'être défini(s) ci-dessus est(sont) mis en contact avec au moins un composé oxygéné de métal alcalin. Dans la présente description, par « composé oxygéné de métal alcalin », on entend un composé comportant au moins un atome de métal alcalin et au moins un atome d'oxygène.

De préférence, le composé oxygéné de métal alcalin est choisi parmi les oxydes, les hydroxydes, les hydrogénocarbonates, les carbonates, les sulfates, les sulfites, les nitrates, les nitrites et les carboxylates (par exemple oxalates, formates, acétates, lactates, citrates et autres) dudit métal alcalin et les mélanges de deux ou plusieurs d'entre eux, en toutes proportions.

Par « métal alcalin », on entend les métaux alcalins de la colonne 1 du tableau périodique des éléments, et plus particulièrement les métaux alcalins choisis parmi lithium, sodium, potassium, rubidium, césium et leurs mélanges, de préférence le métal alcalin est le lithium, le sodium ou le potassium, de manière tout à fait préférée le métal alcalin est le lithium.

S'agissant des composés oxygénés de lithium, on préfère ceux choisis parmi l'oxyde de lithium (Li₂O), l'hydroxyde de lithium (LiOH), le carbonate de lithium (Li₂CO₃), l'hydrogénocarbonate de lithium (LiHCO₃), le sulfate de lithium (Li₂SO₄), le nitrate de lithium (LiNO₃) et l'oxalate de lithium (Li₂C₂O₄).

S'agissant des composés oxygénés de sodium, on préfère ceux choisis parmi l'oxyde de sodium (Na₂O), l'hydroxyde de sodium (NaOH), le carbonate de sodium (Na₂CO₃), l'hydrogénocarbonate de sodium (NaHCO₃), le sulfate de sodium (Na₂SO₄), le nitrate de sodium (NaNO₃) et l'oxalate de sodium (Na₂C₂O₄).

S'agissant des composés oxygénés de potassium, on préfère ceux choisis parmi l'oxyde de potassium (K₂O), l'hydroxyde de potassium (KOH), le carbonate de potassium (K₂CO₃), l'hydrogénocarbonate de potassium (KHCO₃), le sulfate de potassium (K₂SO₄), le nitrate de potassium (KNO₃) et l'oxalate de potassium (K₂C₂O₄).

S'agissant des composés oxygénés de rubidium, on préfère ceux choisis parmi les oxydes de rubidium (Rb₂O, Rb₂O₂, Rb₂O₃, RbO₂), l'hydroxyde de rubidium (RbOH), le carbonate de rubidium (Rb₂CO₃), l'hydrogénocarbonate de rubidium (RbHCO₃), le sulfate de rubidium (Rb₂SO₄), le nitrate de rubidium (RbNO₃) et l'oxalate de rubidium (Rb₂C₂O₄).

S'agissant des composés oxygénés de césium, on préfère ceux choisis parmi l'oxyde de césium (Cs₂O), l'hydroxyde de césium (CsOH), le carbonate de césium (Cs₂CO₃), l'hydrogénocarbonate de césium (CsHCO₃), le sulfate de césium (Cs₂SO₄), le nitrate de césium (CsNO₃) et l'oxalate de césium (Cs₂C₂O₄).

Les composés oxygénés de métaux alcalins tels qu'ils viennent d'être décrits ci-dessus sont connus et disponibles dans le commerce ou sont aisément préparés à partir de modes opératoires connus de la littérature brevets, de la littérature scientifique, des Chemical Abstracts, ou de l'Internet.

Le procédé selon la présente invention est tout particulièrement adapté pour la préparation de sulfure de lithium (Li₂S), à partir de disulfure de diméthyle (DMDS) et d'hydroxyde de lithium ou de carbonate de lithium ou d'oxyde de lithium, de manière préférée à partir de DMDS et d'oxyde et/ou d'hydroxyde de lithium.

Selon le procédé de la présente invention, le ratio molaire « composé(s) soufré / composé(s) oxygéné(s) alcalin(s) » est choisi de façon que le ratio molaire soufre/métal alcalin soit généralement compris entre 0,5 et 10, préférentiellement entre 0,5 et 5, bornes incluses. La mise en œuvre du procédé de l'invention avec ledit ratio molaire inférieur à 0,5 ne conduirait pas à une sulfuration totale du ou des métaux alcalins. Un ratio molaire supérieur à 10 ne contreviendrait pas à la réalisation du procédé de l'invention, mais serait considéré comme non rentable, puisqu'une grande partie du ou des composé(s) de formule (I) ne serait pas utilisée pour la sulfuration du métal alcalin.

Le procédé selon la présente invention est caractérisé par le fait qu'il comprend au moins une étape a) de réaction d'au moins un composé de formule (I) tel que défini précédemment, avec au moins un composé oxygéné de métal alcalin tel que défini précédemment.

Selon une variante du procédé de l'invention, l'étape a) comprend également l'addition d'une quantité d'hydrogène dans un rapport molaire H₂/atome de soufre provenant du composé soufré de formule (I) compris entre 0,01 et 10, de préférence entre 0,01 et 1.

De préférence, l'étape a) du procédé de l'invention est réalisée à une température comprise entre 150°C et 1500°C, plus préférentiellement entre 150°C et 800°C.

Selon un mode de réalisation du procédé de l'invention, l'étape a) est réalisée à une température comprise entre 150°C et 400 °C, préférentiellement comprise entre 200°C et 350°C.

Dans cette première plage de températures, l'étape a) est avantageusement conduite en présence d'au moins un catalyseur, qui a notamment pour but notamment d'augmenter la cinétique de la réaction.

Dans ce cas, le catalyseur peut être de tout type connu de l'homme du métier et de préférence choisi parmi les oxydes de cobalt, les oxydes de nickel, les oxydes de molybdène et leurs mélanges, supportés ou non par exemple sur silice, alumine ou charbon actif. Par exemple le catalyseur peut être choisi parmi les catalyseurs commerciaux de la société Axens, tels que le HR626, le HR526, le HR548 ou le HR648.

Selon un autre mode de réalisation de l'invention, l'étape a) est réalisée à une température préférentiellement comprise entre 300°C et 800°C, de manière encore plus préférée entre 300°C et 600°C. Dans cette seconde plage de température, la réaction peut être conduite sans catalyseur et est de préférence conduite en l'absence de catalyseur. Toutefois, l'étape a) peut être conduite en présence d'au moins un catalyseur, tel que ceux définis ci-dessus dans cette plage de température comprise 300 et 600°C.

La réaction entre au moins un composé de formule (I) et au moins un composé oxygéné de métal alcalin peut être réalisée en milieu solvant ou en l'absence de solvant, on préfère toutefois conduire la réaction en l'absence de solvant afin d'éviter les éventuels traitements et/ou recyclages du ou des solvant(s) utilisé(s).

L'étape a) du procédé selon l'invention peut être conduite sous pression, sous pression réduite ou encore à pression atmosphérique, selon la température choisie, la nature des réactifs, la nature du produit final souhaité et de la présence de l'éventuel solvant et de l'éventuel catalyseur. De manière générale, l'étape a) est de préférence conduite à pression atmosphérique, pour des raisons évidentes de simplicité et du coût global de mise en œuvre du procédé de l'invention.

L'étape a) du procédé de la présente invention peut être réalisée dans tout type de réacteur adapté, sous agitation ou sans agitation, ou bien dans une colonne réactionnelle, ce dernier mode de réalisation étant particulièrement préféré. Au moins un composé soufré de formule (I), préchauffé ou non, est injecté, sous forme liquide, en continu ou en batch, directement ou par l'intermédiaire d'un vaporisateur si le composé de formule (I) est sous forme gazeuse, sur au moins un composé oxygéné de métal alcalin, généralement sous forme solide, préchauffé ou non, en présence éventuelle d'un ou plusieurs solvant(s), éventuellement en présence d'hydrogène, et en présence éventuelle d'un ou plusieurs catalyseurs, comme indiqué précédemment.

La réaction est conduite à la température et à la pression choisie, pendant une durée suffisante pour obtenir le degré de sulfuration souhaité dudit composé oxygéné de métal alcalin, généralement pendant une durée comprise entre quelques secondes et quelques heures.

Dans un mode de mise en œuvre de l'invention, l'étape a) comprend également l'addition d'une quantité d'eau telle que le rapport molaire H₂O/atome de soufre provenant du composé soufré de formule (I) (c'est-à-dire moles H₂O/moles S) est avantageusement compris entre 0,01 et 10, de préférence entre 0,01 et 1. En variante, l'eau peut être remplacée en totalité ou en partie par de l'hydrogène, dans les mêmes proportions que celles indiquées ci-dessus.

L'eau et/ou l'hydrogène peu(ven)t être ajouté(e)(s) en une ou plusieurs fois, de manière continue ou discontinue. Dans un mode de réalisation préféré, de l'eau est ajoutée au cours de l'étape a) du procédé selon la présente invention.

Selon une variante du procédé de l'invention, du soufre peut être apporté ou introduit dans le milieu réactionnel. Le soufre peut provenir du composé soufré lui-même, ou encore être ajouté (injecté) directement sous forme liquide ou solide dans le milieu réactionnel.

Lorsque du soufre est injecté directement sous forme liquide dans le milieu réactionnel, on peut ainsi envisager de mettre en œuvre le procédé de l'invention en utilisant du DMDS et du soufre liquide (S₈). En variante, le soufre peut être introduit sous forme solide, par exemple en mélange intime de soufre solide avec le composé oxygéné de métal alcalin dont on souhaite préparer le sulfure.

Il doit être également compris que le procédé de sulfuration d'au moins un composé oxygéné de métal alcalin selon la présente invention peut être conduit en présence de sulfure de carbone (CS₂) et/ou de sulfure d'hydrogène (H₂S), bien que ceci ne constitue pas un mode de mise en œuvre préféré, notamment pour les raisons évoquées précédemment de toxicité et de dangerosité de ces composés.

Dans un mode de mise en œuvre de l'invention, l'étape a) est suivie d'une étape b) de récupération du sulfure de métal alcalin préparé dans le réacteur ou la colonne utilisé dans l'étape a) ; et éventuellement d'une étape c) de purification du sulfure de métal alcalin obtenu, selon toute méthode connue de l'homme du métier, par exemple par lavage, recristallisation, et autres.

Selon un autre aspect, la présente invention concerne l'utilisation d'au moins un composé de formule (I) tel que défini précédemment pour la préparation de sulfures de métal alcalin de formule M₂S, dans laquelle M représente un atome de métal alcalin, de préférence choisi parmi le lithium, le sodium, le potassium, le rubidium et le césium, et en particulier l'utilisation de disulfure de diméthyle pour la préparation de sulfure de lithium.

Comme indiqué précédemment, les sulfures de métaux alcalins tels que ceux obtenus selon le procédé de la présente invention trouvent des applications dans de très nombreux domaines, tels que par exemple les films semi-conducteurs pour les cellules photovoltaïques dans le cas du sulfure de rubidium, dans les industries du textile, du cuir et du papier pour le sulfure de sodium, ou encore comme composant de formulations de lubrifiants, ou composant d'électrolytes ou d'électrodes dans les systèmes de stockage d'énergie, dans le cas du sulfure de lithium.

Le sulfure de lithium est notamment tout à fait adapté en tant que composant dans les systèmes de stockage d'énergie, tels les piles et batteries lithium-soufre qui présentent une autonomie améliorée et une densité d'énergie plus importante que celles des batteries lithium-ions.

En effet, les batteries lithium-ions peuvent présenter certains problèmes de sécurité en raison de l'utilisation d'une électrode négative en lithium métallique. L'utilisation d'une telle électrode négative et les problèmes de sécurité qui lui sont inhérents peuvent être résolus grâce à l'utilisation d'une électrode positive à base de sulfure de lithium.

Cette alternative permet en effet la réalisation d'accumulateurs Li-ion/S, en ce que l'utilisation d'une électrode positive de Li₂S apporte la source de lithium, et peut alors être couplée à un matériau d'électrode négative autre que le lithium, tel que par exemple le graphite (C), le silicium (Si), l'étain (Sn), etc.

Les exemples suivants illustrent l'invention sans limiter en aucune façon la portée de protection demandée, telle qu'elle apparaît dans les revendications annexées.

### Exemple 1 :

De l'oxyde de lithium (Li₂O) en poudre de 150 µm et de pureté 99,5% de la société Alfa Aesar est broyé de manière à récupérer une granulométrie d'environ 10 µm. On prélève 10 g de cette poudre d'oxyde de lithium et on la dépose dans un creuset en silicate.

Un tube en Hastelloy de diamètre 3 cm et de longueur 50 cm a été spécialement conçu afin de disposer et maintenir une grille perforée à 30 cm d'un bord du tube (et donc 20 cm de l'autre bord). La partie du tube de 30 cm est appelé partie A et celle de 20 cm partie B pour la compréhension de cet exemple. Les deux extrémités du tube sont prévues pour accueillir des grilles perforées avant de connecter ce tube à un réseau d'alimentation gazeux.

Le creuset en silicate contenant les 10 g d'oxyde de lithium est déposé au centre de la partie B du tube. Le tube est inséré dans un four de pyrolyse afin de pouvoir monter en température.

Les extrémités du tube sont connectées à des réseaux d'alimentation gaz permettant d'alimenter en gaz le tube dans le sens partie A vers partie B, après avoir pris la précaution de positionner les grilles perforées aux 2 extrémités du tube. Une étape de déshydratation de l'oxyde de lithium est engagée en réalisant un balayage sous azote 10 minutes à 250°C. Le débit d'azote est de 50 NL/h. À la fin de cette étape, on augmente la température à 550°C, toujours sous débit d'azote.

Ensuite, du disulfure de diméthyle (DMDS), fourni par la société Arkema, de pureté 99,5% est injecté dans le tube. Un débit de 60 g/h de DMDS dans 60 NL/h d'azote est injecté dans le tube afin de sulfurer la poudre d'oxyde de lithium en sulfure de lithium. Le temps de réaction est maintenu pendant 2 heures. À la fin de la sulfuration, le réacteur est refroidi sous azote avec un débit de 50 NL/h.

L'analyse par fluorescence X de la poudre finale obtenue révèle un taux de sulfuration acceptable correspondant à un taux de conversion molaire de Li₂O en Li₂S supérieur à 95% de Li₂S formé. Cependant quelques traces de composés carbonés sont observées par l'analyse élémentaire.

### Exemple 2 :

On répète l'exemple 1, mais pour cet exemple, la réaction de sulfuration est conduite avec un débit de 60 g/h de DMDS dans 60 NL/h d'hydrogène (au lieu d'azote). Le mélange DMDS/H₂ est injecté dans le tube afin de sulfurer la poudre d'oxyde de lithium en sulfure de lithium. Le temps de réaction est maintenu pendant 2 heures. À la fin de la sulfuration, le réacteur est refroidi sous azote avec un débit de 50 NL/h.

L'analyse par fluorescence X de la poudre finale obtenue révèle un taux de conversion molaire de Li₂O en Li₂S complet de 100%.

### Exemple 3:

On répète l'exemple 2, mais pour cet exemple, un catalyseur cobalt/molybdène supporté sur alumine, HR626 de la société Axens, est disposé dans l'ensemble du compartiment A du tube en Hastelloy. Une quantité totale d'environ 210 mL de catalyseur est ainsi disposée entre les deux grilles perforées séparant les parties A et B et l'autre à l'extrémité du tube.

Au lieu d'oxyde de lithium comme à l'exemple 2, de l'hydroxyde de lithium (LiOH) en poudre et de pureté 99.995% est approvisionné d'Alfa Aesar. Ce LiOH est broyé de manière à récupérer une granulométrie d'environ 10 µm. On prélève 10 g de cette poudre d'oxyde de lithium et on la dépose dans un creuset en silicate. Le creuset en silicate contenant les 10 g d'hydroxyde de lithium est déposé au centre de la partie B du tube.

Le tube est inséré dans un four de pyrolyse afin de pouvoir monter en température. Les extrémités du tube sont connectées à des réseaux d'alimentation gaz permettant d'alimenter en gaz le tube dans le sens partie A vers partie B, après avoir pris la précaution de positionner les grilles perforées aux 2 extrémités du tube. Une étape de déshydratation de l'hydroxyde de lithium est engagée en réalisant un balayage sous azote pendant 1 heure à 250°C. Le débit d'azote est de 50 NL/h.

À la fin de cette étape, on augmente la température à 350°C, toujours sous débit d'azote. Ensuite un débit de 40 g/h de DMDS dans 40 NL/h d'hydrogène est injecté dans le tube afin de sulfurer la poudre d'hydroxyde de lithium en sulfure de lithium. Le temps de réaction est de 30 minutes. À la fin de la sulfuration, le réacteur est refroidi sous azote avec un débit de 50 NL/h

L'analyse par fluorescence X de la poudre finale obtenue révèle un taux de conversion molaire de 2LiOH en Li₂S complet de 100%, et ce malgré une température de sulfuration de 350°C.

## Revendications

1. Procédé de préparation d'un sulfure de métal alcalin, à partir d'au moins un composé oxygéné de métal alcalin comprenant au moins une étape a) consistant à faire réagir le(s)dit(s) composé(s) oxygéné(s) alcalin avec au moins un composé soufré de formule (I) : 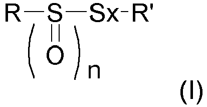 dans laquelle :
- R représente un radical alkyle, linéaire ou ramifié, ou alcényle, linéaire ou ramifié, contenant de 1 à 6 atomes de carbone, de préférence de 1 à 4 atomes de carbone, bornes incluses ;
- n est égal à 0, 1 ou 2 ;
- x est égal à 0 ou à un nombre entier prenant les valeurs 1 à 10, bornes incluses, de préférence x est un nombre entier égal à 1, 2, 3 ou 4 ;
- R' représente un radical alkyle, linéaire ou ramifié, ou alcényle, linéaire ou ramifié, contenant de 1 à 6 atomes de carbone, bornes incluses, de préférence de 1 à 4 atomes de carbone ou, seulement si n = x = 0, un atome d'hydrogène ;
- ou bien R et R' peuvent former ensemble, et avec le ou les atome(s) de soufre qui les porte(nt) un hétérocycle soufré contenant de 2 à 12 atomes de carbone, bornes incluses, de préférence de 2 à 8 atomes de carbone, bornes incluses, et éventuellement, outre le ou les atome(s) de soufre indiqués dans la formule (I), un ou plusieurs hétéroatomes choisis parmi oxygène, azote et soufre,
- dans lequel ledit composé soufré de formule (I) est tel que n = 0 et,
- dans lequel ledit composé soufré de formule (I) est tel que x = 1, 2 ou 3, ou est un mélange de composés soufrés avec, en moyenne, x compris entre 2 et 10 (bornes incluses) de préférence avec une valeur moyenne de x comprise entre 3 et 5 (bornes incluses).

2. Procédé selon la revendication 1, dans lequel ledit composé oxygéné de métal alcalin est choisi parmi les oxydes, les hydroxydes, les hydrogénocarbonates, les carbonates, les sulfates, les sulfites, les nitrates, les nitrites et les carboxylates dudit métal alcalin ainsi que les mélanges de deux ou plusieurs d'entre eux, en toutes proportions.

3. Procédé selon la revendication 1 ou la revendication 2, dans lequel le métal alcalin est choisi parmi le lithium, le sodium, le potassium, le rubidium, le césium et leurs mélanges, de préférence le métal alcalin est le lithium.

4. Procédé selon l'une quelconque des revendications précédentes, dans lequel le composé soufré est choisi parmi le trisulfure de diméthyle, le trisulfure de diéthyle, le tétrasulfure de diméthyle, le tétrasulfure de diéthyle, le disulfure de diméthyle, le disulfure de di-éthyle, le disulfure de di-n-propyle, le disulfure de di-iso-propyle, et leurs mélanges, de préférence le disulfure de diméthyle, le trisulfure de diéthyle et le tétrasulfure de diméthyle, et leurs mélanges.

5. Procédé selon l'une quelconque des revendications précédentes, dans lequel l'étape a) est réalisée à une température comprise entre 150°C et 1500°C, préférentiellement comprise entre 300°C et 800°C, plus préférentiellement comprise entre 300°C et 600°C.

6. Procédé selon l'une quelconque des revendications précédentes, dans lequel l'étape a) est réalisée en présence d'au moins un catalyseur choisi parmi les oxydes de cobalt, les oxydes de nickel, les oxydes de molybdène et leurs mélanges, supportés ou non par exemple sur silice, alumine ou charbon actif, à une température comprise entre 150 et 400 °C, préférentiellement comprise entre 200 et 350°C.

7. Procédé selon l'une quelconque des revendications 1 à 5, dans lequel l'étape a) est réalisée en l'absence de catalyseur à une température préférentiellement comprise entre 300 et 600°C.

8. Procédé selon l'une quelconque des revendications précédentes, de préparation de sulfure de lithium (Li₂S), à partir de disulfure de diméthyle (DMDS) et d'hydroxyde de lithium ou de carbonate de lithium, ou d'oxyde de lithium, de manière préférée à partir de DMDS et d'oxyde et/ou d'hydroxyde de lithium.

9. Utilisation d'au moins un composé de formule (I), selon l'une quelconque des revendications 1 ou 4, pour la préparation d'un sulfure de métal alcalin de formule M₂S, ou M représente un métal alcalin, de préférence choisi parmi lithium, potassium, sodium, rubidium et césium, de préférence parmi lithium, potassium et sodium.

10. Utilisation selon la revendication 9, dans laquelle le composé de formule (I) est le disulfure de diméthyle et le sulfure de métal alcalin est le sulfure de lithium.

## Patentansprüche

1. Verfahren zur Herstellung eines Alkalimetallsulfids aus mindestens einer sauerstoffhaltigen Alkalimetallverbindung, umfassend mindestens einen Schritt a), der darin besteht, dass man die sauerstoffhaltige Alkalimetallverbindung bzw. die sauerstoffhaltigen Alkalimetallverbindungen mit mindestens einer Schwefelverbindung der Formel (I): 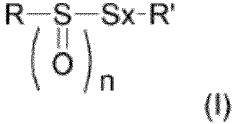 in der:
- R für einen linearen oder verzweigten Alkyl- oder linearen oder verzweigten Alkenylrest mit 1 bis 6 Kohlenstoffatomen und vorzugsweise 1 bis 4 Kohlenstoffatomen einschließlich der Grenzen steht;
- n gleich 0, 1 oder 2 ist;
- x gleich null oder einer ganzen Zahl, die Werte von 1 bis 10 einschließlich der Grenzen annimmt, ist; vorzugsweise x eine ganze Zahl gleich 1, 2, 3 oder 4 ist;
- R' für einen linearen oder verzweigten Alkyl- oder linearen oder verzweigten Alkenylrest mit 1 bis 6 Kohlenstoffatomen und vorzugsweise 1 bis 4 Kohlenstoffatomen einschließlich der Grenzen oder nur dann, wenn n = x = 0, für ein Wasserstoffatom steht;
- oder auch R und R' zusammen und mit dem Schwefelatom bzw. den Schwefelatomen, das bzw. die sie trägt bzw. tragen, einen schwefelhaltigen Heterocyclus bilden können, der 2 bis 12 Kohlenstoffatome einschließlich der Grenzen, vorzugsweise 2 bis 8 Kohlenstoffatome einschließlich der Grenzen und gegebenenfalls zusätzlich zu dem oder den in Formel (I) angegebenen Schwefelatomen ein oder mehrere aus Sauerstoff, Stickstoff und Schwefel ausgewählte Heteroatome enthält,
umsetzt,
- wobei die Schwefelverbindung der Formel (I) derart beschaffen ist, dass n = 0, und
- wobei die Schwefelverbindung der Formel (I) derart beschaffen ist, dass x = 1, 2 oder 3, oder ein Gemisch von Schwefelverbindungen ist, wobei x durchschnittlich zwischen 2 und 10 (einschließlich der Grenzen) liegt und x vorzugsweise einen durchschnittlichen Wert zwischen 3 und 5 (einschließlich der Grenzen) aufweist.

2. Verfahren nach Anspruch 1, wobei die sauerstoffhaltige Alkalimetallverbindung aus den Oxiden, Hydroxiden, Hydrogencarbonaten, Carbonaten, Sulfaten, Sulfiten, Nitraten, Nitriten und Carboxylaten des Alkalimetalls sowie Gemischen von zwei oder mehr davon in allen Anteilen ausgewählt wird.

3. Verfahren nach Anspruch 1 oder Anspruch 2, wobei das Alkalimetall aus Lithium, Natrium, Kalium, Rubidium, Caesium und Mischungen davon ausgewählt wird und es sich vorzugsweise bei dem Alkalimetall um Lithium handelt.

4. Verfahren nach einem der vorhergehenden Ansprüche, wobei die schwefelhaltige Verbindung aus Dimethyltrisulfid, Diethyltrisulfid, Dimethyltetrasulfid, Diethyltetrasulfid, Dimethyldisulfid, Diethyldisulfid, Di(n-propyl)disulfid, Diisopropyldisulfid und Gemischen davon, vorzugsweise Dimethyldisulfid, Diethyltrisulfid und Dimethyltetrasulfid und Gemischen davon ausgewählt wird.

5. Verfahren nach einem der vorhergehenden Ansprüche, wobei Schritt a) bei einer Temperatur zwischen 150 °C und 1500 °C, bevorzugt zwischen 300 °C und 800 °C, weiter bevorzugt zwischen 300 °C und 600 °C, durchgeführt wird.

6. Verfahren nach einem der vorhergehenden Ansprüche, wobei Schritt a) in Gegenwart mindestens eines Katalysators, der aus Cobaltoxiden, Nickeloxiden, Molybdänoxiden und Gemischen davon, die gegebenenfalls geträgert sind, beispielsweise auf Siliciumdioxid, Aluminiumoxid oder Aktivkohle, ausgewählt wird, bei einer Temperatur zwischen 150 und 400 °C, vorzugsweise zwischen 200 und 350 °C, durchgeführt wird.

7. Verfahren nach einem der Ansprüche 1 bis 5, wobei Schritt a) in Abwesenheit von Katalysator bei einer Temperatur durchgeführt wird, die bevorzugt zwischen 300 und 600 °C liegt.

8. Verfahren nach einem der vorhergehenden Ansprüche zur Herstellung von Lithiumsulfid (Li₂S) aus Dimethyldisulfid (DMDS) und Lithiumhydroxid oder Lithiumcarbonat oder Lithiumoxid, vorzugsweise aus DMDS und Lithiumoxid und/oder Lithiumhydroxid.

9. Verwendung mindestens einer Verbindung der Formel (I) nach einem der Ansprüche 1 oder 4 zur Herstellung eines Alkalimetallsulfids der Formel M₂S, wobei M für ein Alkalimetall steht, das vorzugsweise aus Lithium, Kalium, Natrium, Rubidium und Caesium, vorzugsweise aus Lithium, Kalium und Natrium, ausgewählt ist.

10. Verwendung nach Anspruch 9, wobei es sich bei der Verbindung der Formel (I) um Dimethyldisulfid handelt und es sich bei dem Alkalimetallsulfid um Lithiumsulfid handelt.

## Claims

1. Process for the preparation of an alkali metal sulfide from at least one oxygen-comprising alkali metal compound, comprising at least one step a) consisting in reacting said oxygen-comprising alkali metal compound(s) with at least one sulfur-comprising compound of formula (I): 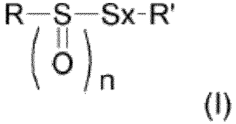 in which:
- R represents a linear or branched alkyl or linear or branched alkenyl radical comprising from 1 to 6 carbon atoms, preferably from 1 to 4 carbon atoms, limits included;
- n is equal to 0, 1 or 2;
- x is equal to 0 or to an integer taking the values from 1 to 10, limits included, preferably x is an integer equal to 1, 2, 3 or 4;
- R' represents a linear or branched alkyl or a linear or branched alkenyl radical comprising from 1 to 6 carbon atoms, limits included, preferably from 1 to 4 carbon atoms, or, only if n = x = 0, a hydrogen atom;
- or else R and R' can together form, with the sulfur-comprising atom(s) which carry/carries them, a sulfur-comprising heterocycle comprising from 2 to 12 carbon atoms, limits included, preferably from 2 to 8 carbon atoms, limits included, and optionally, in addition to the sulfur atom(s) indicated in formula (I), one or more heteroatoms chosen from oxygen, nitrogen and sulfur,
- in which said sulfur-comprising compound of formula (I) is such that n = 0, and
- in which said sulfur-comprising compound of formula (I) is such that x = 1, 2 or 3, or is a mixture of sulfur-comprising compounds with, on average, x between 2 and 10 (limits included), preferably with an average value of x of between 3 and 5 (limits included).

2. Process according to Claim 1, in which said oxygen-comprising alkali metal compound is chosen from the oxides, hydroxides, hydrogen carbonates, carbonates, sulfates, sulfites, nitrates, nitrites and carboxylates of said alkali metal and also the mixes of two or more of them, in any proportions.

3. Process according to Claim 1 or Claim 2, in which the alkali metal is chosen from lithium, sodium, potassium, rubidium, caesium and mixtures thereof; preferably, the alkali metal is lithium.

4. Process according to any one of the preceding claims, in which the sulfur-comprising compound is chosen from dimethyl trisulfide, diethyl trisulfide, dimethyl tetrasulfide, diethyl tetrasulfide, dimethyl disulfide, diethyl disulfide, di(n-propyl) disulfide, diisopropyl disulfide, and mixtures thereof, preferably dimethyl disulfide, diethyl trisulfide and dimethyl tetrasulfide, and mixtures thereof.

5. Process according to any one of the preceding claims, in which step a) is carried out at a temperature of between 150°C and 1500°C, preferentially between 300°C and 800°C, more preferentially of between 300°C and 600°C.

6. Process according to any one of the preceding claims, in which step a) is carried out in the presence of at least one catalyst chosen from cobalt oxides, nickel oxides, molybdenum oxides and mixtures thereof, which are optionally supported, for example on silica, alumina or active charcoal, at a temperature of between 150°C and 400°C, preferentially of between 200°C and 350°C.

7. Process according to any one of Claims 1 to 5, in which step a) is carried out in the absence of catalyst at a temperature preferentially between 300°C and 600°C.

8. Process according to any one of the preceding claims, for the preparation of lithium sulfide (Li₂S) from dimethyl disulfide (DMDS) and lithium hydroxide or lithium carbonate, or from lithium oxide, preferably from DMDS and lithium oxide and/or lithium hydroxide.

9. Use of at least one compound of formula (I), according to either one of Claims 1 and 4, for the preparation of an alkali metal sulfide of formula M₂S, where M represents an alkali metal, preferably chosen from lithium, potassium, sodium, rubidium and caesium, preferably from lithium, potassium and sodium.

10. Use according to Claim 9, in which the compound of formula (I) is dimethyl disulfide and the alkali metal sulfide is lithium sulfide.
